# EUROPEAN PATENT SPECIFICATION

(11) **EP 4 166 622 B1**
(45) Date of publication and mention of the grant of the patent: **11.02.2026**
(21) Application number: 21825993.5
(22) Date of filing: 09.06.2021
(51) Int. Cl.: F16D 65/092, F16D 69/02, F16D 65/12, F16D 69/00

(54) **FRICTION PAIR**
REIBPAARUNG
PAIRE DE FRICTION

(30) Priority: 16.06.2020 JP 2020103801
(43) Date of publication of application: 19.04.2023
(73) Proprietor: Nisshinbo Brake Inc., Chuo-ku Tokyo 103-8650 (JP)
(72) Inventor: FUNAMOTO, Sota, Ora-gun, Gunma 370-0614 (JP); KURIMOTO, Kenta, Ora-gun, Gunma 370-0614 (JP)
(74) Representative: Stolmár & Partner Patentanwälte PartG mbB
(86) International application number: PCT/JP2021/021879
(87) International publication number: WO 2021/256338

(56) References cited:
- EP-B1- 1 482 203
- WO-A1-2016/060129
- GB-A- 2 282 821
- JP-A- 2005 008 865

## Description

### [Field of Invention]

This invention relates to a friction pair, especially relating to a friction pair used for a vehicle such as a passenger car.

### [Background of Invention]

Conventionally, a disc brake pad with a friction material affixed on a metal base member has been used as a friction member of a disc brake for a passenger car.

Recently, as a quietness of a brake has been required, a disc brake pad with a non-asbestos-organic (NAO) friction material to produce less brake noise has widely been used.

The NAO friction material is manufactured by forming a friction material composition containing a binder, a fiber base material other than a steel based fibers such as a steel fiber and a stainless steel fiber, and the NAG friction material is classified as one type of friction materials in parallel with a semi-metallic friction material and a low steel friction material that contain the steel based fiber as the fiber base material. Then, recently, because of the laws and regulations in the United States of America that restricts the amount of copper component in the friction material, the friction material that contains 5 weight % or less of the copper component or does not contain the copper component became more common.

Patent Document 1 discloses the friction material composition that contains the fiber base material, the friction modifier, and the binder, where the friction material composition contains the copper component of 0.5 weight % or less in terms of the copper element and contains a granular titanate obtained by granulating the titanate, as the friction modifier, which has an average particle diameter of the granular titanate of 100 - 250µm and further discloses the friction material obtained by forming the friction material composition.

Patent Document 2 discloses the friction material composition that contains the fiber base material, the inorganic filler, the organic filler, and the binder, and also contains 0.5 mass % or less of the copper, where the friction material composition further contains, as a part of the inorganic filler, an abrasive with the average particle diameter of 3 - 5µm and an abrasive with the average particle diameter of 9 - 13µm and contains, also as the other part of inorganic filler, the titanate with the average particle diameter of 1.5 - 4.5µm and the titanate with the average particle diameter of 15 - 45µm.

As a mating member for the disc brake pad with such a friction material containing almost no copper component, the cast iron disc rotor as in Patent Document 3 has been used. The cast iron disc rotor shows low corrosion resistance and has a problem of rusting while in use, and the friction material has been required to find a countermeasure of the friction material for this problem.

For example, Patent Document 4 discloses the friction material that contains the binder, the friction modifier, and the fiber base material, which improves the descaling performance of the mating member by containing no copper component, 10 - 20 volume %, relative to an entire amount of the friction material composition, of at least one type of titanate compound having multiple projections and 1 - 20 volume %, relative to the entire amount of the friction material composition, of the biosoluble inorganic fiber.

However, as an installation of a regenerative brake has been progressed due to the development of an electric vehicle and a hybrid car, because the brake load applied on the friction material of the conventional hydraulic brake is reduced, a problem of not obtaining sufficient descaling performance even with the technology in the Patent Document 4 exists.

Therefore, the stainless steel disc rotor that has superior rust resistance has been commonly used.

Patent Document 5 discloses the disc rotor for four wheel vehicle, which is manufactured by a stainless steel plate, having the martensite structure or a mixed structure of the martensite phase and the ferrite phase.

Patent Document 6 discloses the disc rotor for an automobile having the structure containing the martensite and the carbonitride and selectively containing the ferrite.

Patent Document 7 discloses the disc rotor for an automobile made of the stainless steel plate that includes C: 0.005 - 0.100%, Si: 0.01 - 1.00%, Mn: 0.010 - 3.00%, P: 0.040% or less, S: 0.0100% or less, Cr: 10.0 - 14.0%, N: 0.005 - 0.100%, V: 0.03 - 0.30%, Al: 0.001 - 0.050%, B: 0.0002 - 0.0050%, Ni: 0 - 2.00%, Cu: 0 - 2.00%, Mo: 0 - 1.00%, W: 0 - 1.00%, Ti: 0 - 0.40%, Nb: 0 - 0.40%, Zr: 0 - 0.40%, Co: 0 - 0.400%, Sn: 0 - 0.40%, REM: 0 - 0.050% or less, Mg: 0 - 0.0100%, Ca: 0 - 0.0100%, Sb: 0 - 0.50%, Ta: 0 - 0.3000%, Hf: 0 - 0.3000%, and Ga: 0 - 0.1000%, and the remaining substances are Fe and impurities, where a metal structure is made of a ferrite phase and 10 - 50 particles per 100µm2 of carbonitride with 0.3µm or more of equivalent circle diameter exists at an arbitrary cross section thereof.

Because of the above-described background, the friction material that does not contain the copper component but is suitable for the stainless steel disc rotor with superior rust resistance has been on demand; however, when the stainless steel disc rotor, which is characterize to stretch to a large extent likely to cause plastic deformation, becomes into the high temperature, it has been clarified that the disc rotor surface tends to tear-off, thereby forming a lump of metal originating from the component of the disc rotor.

### [Prior Arts]

### [Patent Documents]

[Patent Document 1] Japanese Provisional Patent Publication No. 2017-57312
[Patent Document 2] Japanese Provisional Patent Publication No. 2018-162385
[Patent Document 3] Japanese Provisional Patent Publication No. 1990-134425
[Patent Document 4] Japanese Provisional Patent Publication No. 2017-149971
[Patent Document 5] Japanese Provisional Patent Publication No. 2016-117925
[Patent Document 6] Japanese Provisional Patent Publication No. 2019-173086
[Patent Document 7] Japanese Provisional Patent Publication No. 2019-178419

### [Summary of the Invention]

### [Problems to be Resolved by the Invention]

This invention is aimed to provide a friction pair capable of inhibiting to form a lump of a metal on a friction surface of a disc rotor, where the friction pair includes a disc brake pad that is manufactured from a friction material composition containing a binder, a fiber base material, and a friction modifier but not containing a copper component and a ferrous-based metal fiber, and a stainless steel disc rotor.

### [Means to Resolve the Problems]

Inventors of this invention, after serious investigation, found that with respect to the friction pair that includes the disc brake pad having the friction material that is manufactured from the friction material composition containing the binder, the fiber base material, and the friction modifier but not containing the copper component and the ferrous-based metal fiber, and the stainless steel disc rotor, the friction pair is capable of inhibiting to form the lump of the metal on the friction surface of the disc rotor by using the friction material composition that contains 1 - 6 weight % of the trimanganese tetraoxide relative to the entire amount of the friction material composition as the inorganic friction modifier but does not even contain any metal fiber including the ferrous-based metal fiber.

This invention relates to the friction pair that includes the disc brake pad having the friction material that is manufactured from the friction material composition containing the binder, the fiber base material, and the friction modifier but not containing the copper component and the ferrous-based metal fiber, and the stainless steel disc rotor, and further is based on the following technology.
(1) The friction pair that includes the disc brake pad having the friction material that is manufactured from the friction material composition containing the binder, fiber base material, and the friction modifier but not containing the copper component and the ferrous-based metal fiber, and the stainless steel disc rotor, wherein the friction material composition further contains 1 - 6 weight % of a trimanganese tetraoxide relative to the entire amount of the friction material composition as the inorganic friction modifier but does not contain any metal fiber including the ferrous-based metal fiber.

Preferably, the friction material composition contains 1 - 10 weight % of the graphite relative to the entire amount of the friction material composition as the lubricant.

### [Advantage of the Invention]

This invention relates to the friction pair that includes the disc brake pad having the friction material that is manufactured from the friction material composition containing the binder, the fiber base material, and the friction modifier but not containing the copper component and the ferrous-based metal fiber, and the stainless steel disc rotor, and that can provide the friction pair capable of inhibiting to form the lump of metal on the friction surface of the disc rotor.

### [Embodiments of the Invention]

A stainless steel disc rotor shows smaller conductivity and diffusivity than a cast iron disc rotor. Also, the stainless steel shows slightly larger specific gravity but higher strength than the cast iron. Therefore, the stainless steel disc rotor needs to be thinner in order to secure the equivalent specific gravity and the strength to the cast iron disc rotor. Accordingly, a heat capacity of the disc rotor is smaller, which tends to accumulate the disc rotor heat to increase the temperature of the friction material.

Furthermore, the stainless steel is characterized to stretch to a large extent likely to cause plastic deformation. Thus, when the disc rotor temperature becomes high, there is a problem of the disc rotor surface tending to tear-off, which forms a lump of metal of the component of the disc rotor.

The lump of metal formed on the disc rotor surface can be a cause of an abnormal wear of the friction material, and therefore a technology for inhibiting to form the lump of the metal is on demand.

In consideration of the above-issue, with respect to the friction pair that includes the disc brake pad including the friction material having the friction material composition containing the binder, the fiber base material, and the friction modifier but not containing the copper component and the ferrous-based metal fiber, and the stainless steel disc rotor, this invention uses the friction material composition that contains 1 - 6 weight % of the trimanganese tetraoxide as the friction modifier relative to the entire amount of the friction material composition but does not contain any metal fiber including the ferrous-based metal fiber.

The trimanganese tetraoxide is reduced and changed to a manganese due to a frictional effect. This manganese operates to improve a toughness of the stainless steel, thereby hindering the tear-off of the disc rotor surface to inhibit the forming of the lump of the metal on the disc rotor friction surface.

Also, by adding 1 - 10 weight % of graphite, relative to the entire amount of the friction material composition, such as an artificial graphite, a natural graphite, and a graphite sheet pulverized powder in the friction material composition, the reduction of the trimanganese tetraoxide is accelerated, and an effect of suppressing formation of the lump of the metal on the disc rotor friction surface is improved.

### <Friction Material Composition>

The friction material used in the friction pair of this invention is manufactured from the friction material composition containing the binder, the fiber base material, and the friction modifier in addition to the above-explained trimanganese tetraoxide and graphite.

As the binder, either one of binders that are generally used for the friction material such as a straight phenol resin, an acrylic rubber modified phenol resin, a silicone rubber modified phenol resin, a nitrile rubber (NBR) modified phenol resin, a cashew nuts shell liquid (CNSL) modified phenol resin, an aralkyl modified phenol resin (phenol aralkyl resin) obtained by reacting a phenol compound, an aralkyl ether compound and an aldehyde compound, an acrylic rubber dispersed phenol resin, a silicone rubber dispersed phenol resin, and a fluoropolymer dispersed phenol resin, or a combination of two or more of the above-identified binders may be used.

The amount of the binder contained in the friction material composition is preferably 4 - 9 weight % relative to the entire amount of the friction material composition, more preferably 6 - 8 weight % relative to the entire amount of the friction material composition.

As the fiber base material, either one of fiber base materials that are generally used for the friction material such as an aramid fiber, an acrylic fiber, a cellulose fiber, and a polyphenylene benzbisoxazole fiber, or a combination of two or more of the above-identified fiber base materials may be used.

The amount of the fiber base material contained in the friction material composition is preferably 1 - 5 weight % relative to the entire amount of the friction material composition, more preferably 2 - 4 weight % relative to the entire amount of the friction material composition.

As the friction modifier, a lubricant, an inorganic friction modifier, and an organic friction modifier may be used.

As the lubricant, either one of carbon based lubricants such as an artificial graphite, a natural graphite, a graphite sheet pulverized powder, a petroleum coke, a coal coke, a resilient graphitic carbon, and a polyacrylonitrile oxide fiber pulverized powder, or metal sulfide lubricants such as a tin sulfide, a molybdenum disulfide, an iron sulfide, a bismuth sulfide, a zinc sulfide, and a composite metal sulfide, or a combination of two or more of the above-identified lubricants may be used.

The amount of the lubricant contained in the friction material composition in addition to the above mentioned graphite is preferably 10 - 18 weight % relative to the entire amount of the friction material composition, more preferably 11 - 16 weight % relative to the entire amount of the friction material composition.

As the inorganic friction modifier, other than the above-identified trimanganese tetraoxide, either one of a calcium hydroxide, a calcium carbonate, a barium sulfate, a talc, a dolomite, a zeolite, a triiron tetroxide, a calcium silicate hydrate, a magnesium oxide, a silicon dioxide, a zirconium oxide, a zirconium silicate, a γ-alumina, an α-alumina, a silicon carbide, a columnar titanate, a platy titanate, a particulate titanate, a squamous titanate, an indeterminate titanate with multiple projections, where the titanate may be such as a potassium titanate, a lithium potassium titanate, a magnesium potassium titanate, and a sodium titanate, a wollastonite, a sepiolite, a basalt fiber, a glass fiber, a biosoluble ceramic fiber, or a rock wool, or a combination of two or more of the above-identified inorganic friction modifier may be used.

The amount of the inorganic friction modifier together with the above-identified trimanganese tetraoxide contained in the friction material composition is preferably 60 - 82 weight % relative to the entire amount of the friction material composition, more preferably 65 - 76 weight % relative to the entire amount of the friction material composition.

As the organic friction modifier, either one of the organic friction modifiers that are generally used for the friction material such as a cashew dust, a tire tread rubber pulverized powder, a polytetrafluoroethylene powder, vulcanized rubbers or unvulcanized rubbers such as an acrylic rubber, an isoprene rubber, a nitrile butadiene rubber, a styrene-butadiene rubber, a butyl rubber, and a silicone rubber, or a combination of two or more of the above-identified organic friction modifiers may be used.

The amount of the organic friction modifier contained in the friction material composition is preferably 3 - 8 weight % relative to the entire amount of the friction material composition, more preferably 5 - 7 weight % relative to the entire amount of the friction material composition.

### <Manufacturing Method for Disc Brake Pad>

The disc brake pad according to this invention is typically manufactured through a mixing step for uniformly mixing the predetermined amount of the friction material composition (raw friction material) by a mixer to obtain a raw friction material mixture, a heat press forming step for positioning the obtained raw friction material mixture superposed on a prewashed, surface-treated, and adhesive-coated back plate in a heat forming die to heat press the raw friction material mixture on the back plate to obtain a heat press formed article, a heating step for heating to cause a curing reaction of the heat press formed article to obtain a cured article, a coating step for coating the cured article such as by spray coating and electrostatic powder coating, a baking step for baking the coating to obtain a baked article, and a grinding step for grinding the baked article by a rotary grinder to form a friction surface.

Further, after the heat press forming step, a heat treatment step, which is a combination of the coating step and the baking step, and then the grinding step may follow respectively.

Also, as appropriate, prior to the heat press forming step, a granulating step for granulating the raw friction material mixture, a kneading step for kneading the raw friction material mixture, and a pre-forming step for forming a pre-formed article by positioning the raw friction material mixture or the granulated article obtained through the granulating step or the kneaded article obtained through the kneading step, may be performed, and a scorching step may be performed after the heat press forming step.

### <Stainless Steel Disc Rotor>

As the stainless steel disc rotor, for example, a martensite type stainless steel disc rotor or a ferrite type stainless steel disc rotor may be used.

### [Embodiments]

This invention is explained concretely using the Embodiments and the Comparative Examples of this invention in the following sections; however, this invention is not limited to the following Embodiments.

### [Manufacturing Method for the Friction Material According to Embodiments 1 - 11 and Comparative Examples 1 - 2]

The friction material composition shown in Table 1 is positioned in the Loedige mixer to be mixed for about 5 minutes and is pressed in a pre-forming die under 30MPa for about 10 seconds to obtain the pre-formed article. The pre-formed article is superposed on the steel back plate, which is pre-washed, surface treated, and adhesive coated, to be heat-pressed in the heat forming die at 150 centigrade under the forming pressure of 40MPa for about 10 minutes, then the heat treatment (postcure treatment) at 200 centigrade is performed for about 5 hours, and the grinding step is performed to form the friction surface, thereby obtaining the disc brake pad for a passenger car.

**[TABLE 1]**

| | | | | embodiments | | | | | | | | | | | comparative examples | |
|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 |
| binder | | | straight phenol resin | 7.0 | 7.0 | 7.0 | 7.0 | 7.0 | 7.0 | 7.0 | 7.0 | 7.0 | 7.0 | 7.0 | 7.0 | 7.0 |
| fiber base | | | aramid fiber | 3.0 | 3.0 | 3.0 | 3.0 | 3.0 | 3.0 | 3.0 | 3.0 | 3.0 | 3.0 | 3.0 | 3.0 | 3.0 |
| friction modifier | lubricant | carbonaceous lubricants | graphite sheet pulverized powder | 6.0 | 6.0 | 6.0 | 6.0 | 6.0 | 0.5 | 1.0 | 4.0 | 8.0 | 10.0 | 11.0 | 6.0 | 6.0 |
| | | | petroleum coke | 5.0 | 5.0 | 5.0 | 5.0 | 5.0 | 10.5 | 10.0 | 7.0 | 3.0 | 1.0 | 1.0 | 5.0 | 5.0 |
| | | metal sulfide lubricants | zinc sulfide | 1.0 | 1.0 | 1.0 | 1.0 | 1.0 | 1.0 | 1.0 | 1.0 | 1.0 | 1.0 | 1.0 | 1.0 | 1.0 |
| | inorganic friction modifier | | zirconium oxide | 20.0 | 20.0 | 20.0 | 20.0 | 20.0 | 20.0 | 20.0 | 20.0 | 20.0 | 20.0 | 20.0 | 20.0 | 20.0 |
| | | | zirconium silicate | 1.0 | 1.0 | 1.0 | 1.0 | 1.0 | 1.0 | 1.0 | 1.0 | 1.0 | 1.0 | 1.0 | 1.0 | 1.0 |
| | | | magnesium oxide | 1.0 | 1.0 | 1.0 | 1.0 | 1.0 | 1.0 | 1.0 | 1.0 | 1.0 | 1.0 | 1.0 | 1.0 | 1.0 |
| | | | trimanganese tetroxide | 1.0 | 2.0 | 3.0 | 5.0 | 6.0 | 3.0 | 3.0 | 3.0 | 3.0 | 3.0 | 3.0 | 0.5 | 7.0 |
| | | | lithium potassium titanate | 22.0 | 22.0 | 22.0 | 22.0 | 22.0 | 20.0 | 20.0 | 20.0 | 20.0 | 20.0 | 20.0 | 22.0 | 22.0 |
| | | | calcium hydroxide | 3.0 | 3.0 | 3.0 | 3.0 | 3.0 | 3.0 | 3.0 | 3.0 | 3.0 | 3.0 | 3.0 | 3.0 | 3.0 |
| | | | barium sulfate | 24.0 | 23.0 | 22.0 | 20.0 | 19.0 | 24.0 | 24.0 | 24.0 | 24.0 | 24.0 | 23.0 | 24.5 | 18.0 |
| | organicfriction modifier | | cashew dust | 4.0 | 4.0 | 4.0 | 4.0 | 4.0 | 4.0 | 4.0 | 4.0 | 4.0 | 4.0 | 4.0 | 4.0 | 4.0 |
| | | | tire tread rubber pulverized powder | 2.0 | 2.0 | 2.0 | 2.0 | 2.0 | 2.0 | 2.0 | 2.0 | 2.0 | 2.0 | 2.0 | 2.0 | 2.0 |
| total | | | | 1000 | 100.0 | 100.0 | 1000 | 100.0 | 100.0 | 1000 | 1000 | 1000 | 100.0 | 100.0 | 1000 | 1000 |

Furthermore, test pieces of the Embodiments 1 - 11 and the Comparative Examples 1 - 2 are prepared by cutting the friction material for the disc brake pad into 25mm x 15mm x 15mm pieces

Table 2 shows the "Testing Condition", "Material of Mating Member", "Evaluation Items", and "Evaluation Standard" used to examine the formation of the lump of the metal on the disc rotor friction surface and the stability of the braking effect.

**[TABLE 2]**

| | | forming a metal lump on a disc rotor friction surface | stability of braking effectiveness |
|---|---|---|---|
| testing condition | | based on JASO C406 friction tester (1/10scale tester) | based on JASO C406 friction tester (1/10 scale tester) |
| material of the mating member | | martensitic stainless steel | martensitic stainless steel |
| evaluation Items | | existence or non-existence and size of metal lump on the surface of the mating member after JASO-C406 friction material abrasion testing | changes relative to µ level of the base material x cast iron at JASO-C406 friction testing |
| evaluation Standard | E | no metal lump | 0.38 with tolarence of less than ±5% |
| | G | metal lump (less than 0.5mm) | 0.38 with tolerance of more than ±5% but less than ±10% |
| | P | metal lump (0.5mm or more but less than 1mm) | 0.38 with tolerance of ±10% or more but less than ±15% |
| | F | metal lump (1mm or more) | 0.38 with tolerance of ±15% or more |

Table 3 shows the evaluation result of the respective Embodiments and Comparative Examples with respect to the formation of the lump of the metal on the disc rotor friction surface and the stability of the braking effect shown in the Table 2.

**[TABLE 3]**

| | | embodiments | | | | | | | | | | | comparative examples | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| evaluation result | forming a metal lump on a disc rotor friction surface | P | G | E | E | E | P | G | E | E | E | E | F | E |
| | stability of braking effectiveness | E | E | E | E | P | E | E | E | E | G | P | E | F |

| | | | | | | | | | | | | | | |
|---|---|---|---|---|---|---|---|---|---|---|---|---|---|---|
| E=excellent G = good P=pass F=fail | | | | | | | | | | | | | | |

From the Table 3, it can be seen that the friction material satisfying the conditions of this invention inhibits the formation of the lump of the disc rotor friction surface and provides the stability in the braking effect

### [Industrial Applicability]

According to the present invention, in the friction pair, including the disc brake pad having the friction material manufactured from the friction material composition containing the binder, the fiber base material, and the friction modifier but not containing the copper component and the ferrous-based metal fiber and the stainless steel disc rotor, the friction pair that can inhibit the formation of the lump of the metal on the disc rotor friction surface and provide the excellent stability of the braking effect, thereby offering the excellent practical value.

## Claims

1. A friction pair comprising a disc brake pad having a friction material manufactured from a friction material composition comprising a binder, a fiber base material, and a friction modifier, and also not comprising a copper component and a ferrous-based metal fiber, and a stainless steel disc rotor, wherein
the friction material composition comprises 1- 6 weight % of a trimanganese tetraoxide relative to an entire amount of the friction material composition as an inorganic friction modifier but does not even comprise any metal fiber including a ferrous-based metal fiber.

2. The friction pair according to Claim 1, wherein the friction material composition contains 1- 10 weight % of a graphite relative to the entire amount of the friction material composition as a lubricant.

## Patentansprüche

1. Reibungspaar, umfassend einen Scheibenbremsbelag mit einem Reibungsmaterial, das aus einer Reibungsmaterialzusammensetzung hergestellt ist, die ein Bindemittel, ein Material auf Faserbasis und einen Reibungsmodifikator umfasst und zudem keine Kupferkomponente und keine Eisenmetallfaser umfasst, sowie einen Edelstahl-Scheibenrotor,
wobei
die Reibungsmaterialzusammensetzung 1 bis 6 Gewichts-% eines Trimangantetraoxids, bezogen auf die Gesamtmenge der Reibungsmaterialzusammensetzung, als anorganischen Reibungsmodifikator umfasst, jedoch keine Metallfasern, einschließlich Metallfasern auf Eisenbasis, umfasst.

2. Reibungspaar gemäß Anspruch 1, wobei die Reibungsmaterialzusammensetzung 1 bis 10 Gewichts-% eines Graphits, bezogen auf die Gesamtmenge der Reibungsmaterialzusammensetzung, als Schmiermittel enthält.

## Revendications

1. Paire de friction comprenant une plaquette de frein à disque comportant un matériau de friction fabriqué à partir d'une composition de matériau de friction comprenant un liant, un matériau de base fibreux et un modificateur de friction, et ne comprenant pas non plus de composant en cuivre ni de fibre métallique à base de fer, et un rotor à disque en acier inoxydable,
dans laquelle
la composition de matériau de friction comprend 1 à 6 % en poids d'un tétraoxyde de trimanganèse par rapport à la quantité totale de la composition de matériau de friction en tant que modificateur de friction inorganique, mais ne comprend aucune fibre métallique, y compris une fibre métallique à base de fer.

2. La paire de friction selon la revendication 1, dans laquelle la composition de matériau de friction contient 1 à 10 % en poids d'un graphite par rapport à la quantité totale de la composition de matériau de friction en tant que lubrifiant.
